# EUROPÄISCHE PATENTSCHRIFT

(11) **EP 1 180 249 B1**
(45) Veröffentlichungstag und Bekanntmachung des Hinweises auf die Patenterteilung: **07.05.2003**
(21) Anmeldenummer: 00938611.1
(22) Anmeldetag: 22.04.2000
(51) Int. Cl.: G02B 21/06

(54) **DURCHLICHT - BELEUCHTUNGSEINRICHTUNG FÜR MIKROSKOPE**
TRANSMITTED LIGHT/LIGHTING DEVICE FOR MICROSCOPES
DISPOSITIF D'ECLAIRAGE PAR TRANSMISSION POUR MICROSCOPES

(30) Priorität: 27.04.1999 DE 19919096
(43) Veröffentlichungstag der Anmeldung: 20.02.2002
(60) Teilanmeldung: 03004724.5
(73) Patentinhaber: CARL ZEISS JENA GmbH, 07745 Jena (DE)
(72) Erfinder: TANDLER, Hans, D-07745 Jena (DE); GONSCHOR, Matthias, D-37130 Gleichen (DE); GRETSCHER, Peter, D-07749 Jena (DE)
(86) Internationale Anmeldenummer: EP0003661
(87) Internationale Veröffentlichungsnummer: WO00065398

(56) Entgegenhaltungen:
- DE-A- 4 104 609
- DE-A- 19 726 518
- DE-B- 1 938 835
- US-A- 4 601 551
- US-A- 4 852 985
- US-A- 5 136 429
- US-A- 5 690 417
- US-A- 5 777 784
- PATENT ABSTRACTS OF JAPAN vol. 016, no. 386 (P-1404), 18. August 1992 (1992-08-18) & JP 04 125609 A (SATOSHI KAWADA;OTHERS: 01), 27. April 1992 (1992-04-27)

## Beschreibung

Beleuchtungsanordnungen an Mikroskopen haben einen relativ schlechten Wirkungsgrad bei der Umsetzung von aufgenommener elektrischer Leistung in nutzbare Lichtleistung und sie erzeugen störende Wärme.
Darüber hinaus werden bei aufrechten Stativen Bauräume benötigt, die ergonomisch günstige Anordnungen des Mikroskoptisches verhindern. Schließlich sind die Lösungen bauteilaufwendig und damit teuer. Beleuchtungseinrichtungen für Mikroskope mit LED's bzw. LCD's sind aus DE 3108389A1, US 4852985, DE 3734691 C2, DE 19644662A1 bekannt.

Die genannten Nachteile sollen durch eine LED-Beleuchtungseinheit - bestehend aus einer oder mehreren angeordneten LED's - beseitigt werden, die wahlweise netzabhängig oder durch Batterien betrieben werden.

Diese Aufgabe wird durch die Merkmale des unabhängigen Anspruchs 1 gelöst. Bevorzugte Weiterbildungen sind Gegenstand der abhängigen Ansprüche.
Figur 1 zeigt ein Ausführungsbeispiel für ein erfindungesgemäßes Mikroskop
Figur 2 zeigt ein Ausführungsbeispiel einer Beleuchtungseinheit ohne Leuchtfeldblende
Figuren 3a und 3b zeigen Anordnungen der Beleuchtungs-LED's.

Die Erfindung und ihre Wirkungen und Vorteile werden nachstehend anhand der schematischen Zeichnungen erläutert.

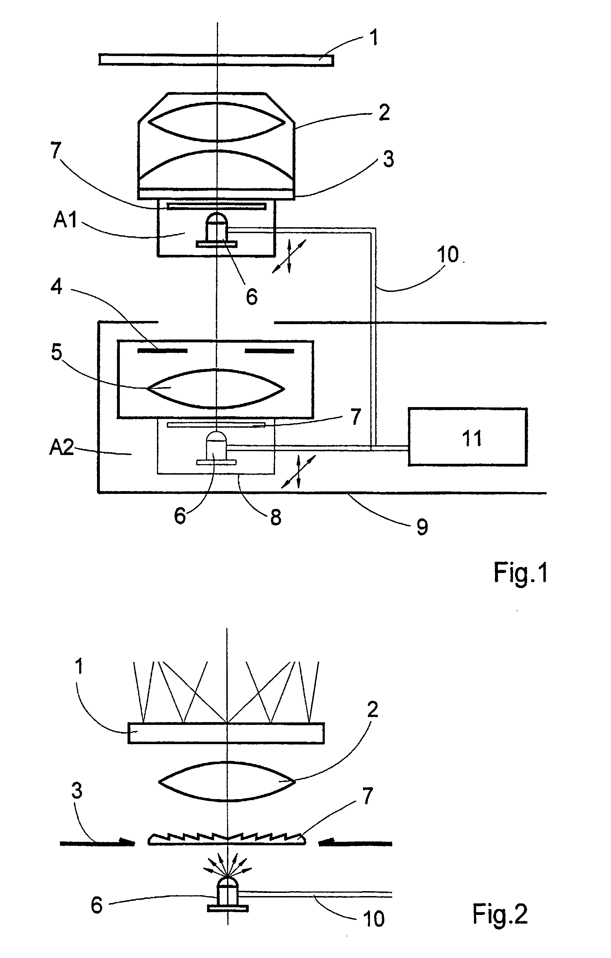

In Fig. 1 ist unter einem durchsichtigen Mikroskoptisch 1, auf dem sich eine Probe befindet, die durch ein nicht dargestelltes Objektiv betrachtet wird, eine Köhlersche Beleuchtungseinheit, bestehend aus Kondensoroptik 2, Aperturblende 3, Leuchtfeldblende 4 mit Kollektor 5 angeordnet, die in einem nicht dargestellten Mikroskopstativ angeordnet ist.
Eine LED-Beieuchtungseinheit, vorzugsweise mit Streumitteln wie einer Streuscheibe 7, hier bestehend aus einer einzelnen LED 6, aber auch als Anordnung mehrerer LED möglich, ist so gestaltet, dass sie sowohl in der Aperturblendenebene (A1) als auch im Mikroskopfuß (A2) angeordnet werden kann.
Hierzu befindet sich die LED 6 in einem Einschub 8, der wahlweise (Wechselrichtung durch Pfeile dargestellt) im Stativfuß 9 oder direkt unterhalb der Aperturblende angeordnet werden kann.
Die LED wird über Leitungen 10 von einer Stromversorgung 11 elektrisch versorgt.
Die Anordnung A1 in der Aperturblendenebene ermöglicht in Kombination mit geeigneten Streumitteln, wie in Fig. 2 dargestellt, wobei hier das Streumittel in oder in der Nähe der Aperturblendenebene eine Mattscheibe mit Zonenlinsenstruktur (Fresnellinse) oder ein Mkirolinsenarray sein kann die Ausleuchtung ausreichend großer Felder und Aperturen und stellt eine kostengünstige Hellfeldbeleuchtung dar, wenn keine Leuchtfeldblende benötigt wird.
Streumittel können auch direkt unter dem Objektträger angeordnet sein.
Darüber hinaus kann der Mikroskoptisch tiefer liegen und in einer ergonomisch günstigen Höhe über dem Arbeitstisch angeordnet werden, was insbesondere für den Routinebetrieb vorteilhaft ist.
Die Anordnung A 2 im Gerätefuß ermöglicht den Einsatz einer Leuchtfeldblende und damit die Durchführung des Köhlerschen Beleuchtungsverfahrens sowie aller herkömmlichen Kontrastverfahren.

Ein Stativ kann auch mit der gleichen LED-Beleuchtungseinheit zwischen den Anordnungen 1 u. 2 umgerüstet werden. Wenn Leuchtfeldblende und Kollektor zu einer ebenfalls nachrüstbaren Einheit zusammengefasst werden, kann diese Einheit auch entfallen, wenn nur Anordnung A1 benutzt wird.
Das Modul enthält die LED und ggf. das Streumittel.
Die Stromversorgung 11 ist vorzugsweise im Mikroskopfuß 9 angeordnet, die Zuleitungen 10 zum LED-Modul können zu beiden Positionen 1 und 2 fest verlegt sein und die Verbindung wird dann direkt am LED- Modul gesteckt.
Die Stromversorgung kann aber auch (Batterie) direkt im Modul untergebracht werden.
Die mechanischen Aufnahmen an beiden Positionen sind so gestaltet, dass das Modul entweder von unten oder von der Seite gesteckt werden kann. Weitere Vorteile des Einsatzes der LED-Beleuchtungseinheit sind lange Lebensdauer, minimaler Energiebedarf, tageslichtähnliche Farbtemperatur, farbtemperaturunabhängige Heiligkeitsregelung und geringe Wärmeentwicklung.

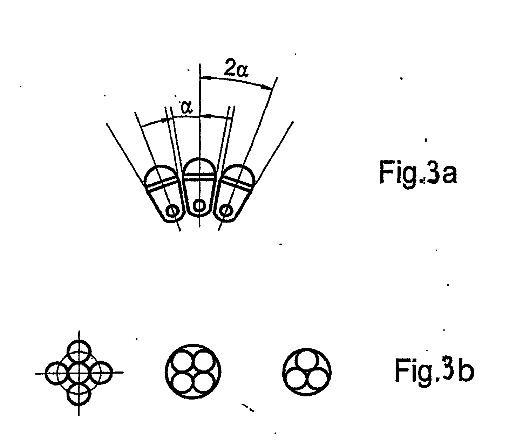

In Fig. 3 ist dargestellt, wie mehrere Weißlicht-LED's so nahe wie möglich in einer der Pupille konjugierten Ebene, die auch eine Kugelfläche sein kann, angeordnet sind und so auch ohne Streumittel für den benötigten Lichtleitwert sorgen.

Hierzu sind die LED's so angeordnet, dass sich die Tangenten ihrer Abstrahlkegel berühren (Fig. 3a), indem der Winkel zwischen den Mittenachsen ihrer Abstrahlkegel im Wesentlichen mit dem Winkel des Abstrahlkegels übereinstimmt.
Über das flächenhafte Parallelschalten einzelner LED's in verschiedenen Anordnungen wie in Fig. 3b dargestellt, kann eine größere strahlende Fläche mit dem gleichen Divergenzwinkel wie der einer einzelnen LED angeboten werden. Durch das gerichtete Verkippen u. straußförmige Zusammenfassen der einzelnen LED's in der Weise, dass sich die Tangenten der Abstrahlkegel berühren, werden sowohl eine größere Fläche als auch ein größerer summarischer Abstrahlwinkel erzeugt.
Anordnungen gemäß Fig. 3 sind vorteilhaft in den Anordnungen nach Fig. 1 oder 2 anwendbar.

Des Weiteren kann die Feld- und Aperturausleuchtung auch durch ein Array aus Mikrolinsen mit unterschiedlichen Brennweiten erfolgen.

Ein Streumittel kann auch direkt in die Zonenlinse oder das Linsenarray integriert sein. So kann z.B. die Unterseite der im Bild 2 dargestellten Zonenlinse mattiert sein oder es könnte eine zusätzliche Mattscheibe oberhalb der Zonenlinse angeordnet werden.

## Patentansprüche

1. Mikroskop mit mindestens einer Durchlicht-Beleuchtungseinrichtung mit mindestens einer LED, wobei das Mikroskop eine Beleuchtungsoptik mit einer Aperturblendenebene und eine Köhlersche Beleuchtungsoptik sowie einen Mikroskopfuß aufweist, **gekennzeichnet dadurch, dass** die Durchlicht-Beleuchtungseinrichtung so gestaltet ist, daß sie sowohl in oder in der Nähe der Ebene der Aperturblende als auch in Mikroskopfuß vor der Köhlerschen Beleuchtungsoptik anordenbar ist.

2. Mikroskop mit mindestens einer Durchlicht-Beleuchtungseinrichtung nach Anspruch 1, **gekennzeichnet dadurch, dass** die LED im Stativfuß vor der Leuchtfeldblende der Köhlerschen Beleuchtungsoptik angeordnet ist.

3. Mikroskop mit mindestens einer Durchlicht-Beleuchtungseinrichtung nach einem der vorangehenden Ansprüche, **gekennzeichnet dadurch, dass** der LED in Lichtrichtung ein optisches Element zur Lichtstreuung nachgeordnet ist.

4. Mikroskop mit mindestens einer Durchlicht-Beleuchtungseinrichtung nach einem der vorangehenden Ansprüche, **gekennzeichnet dadurch, dass** die LED mit Streuscheibe und/ oder Beleuchtungsoptik in einem Einschubteil angeordnet ist.

5. Mikroskop mit mindestens einer Durchlicht-Beleuchtungseinrichtung nach einem der vorangehenden Ansprüche, **gekennzeichnet dadurch, dass** die Lichtquellen Weißlicht-LED's sind.

6. Mikroskop mit mindestens einer Durchlicht-Beleuchtungseinrichtung nach einem der vorangehenden Ansprüche, **gekennzeichnet dadurch, dass** mehrere LED's nebeneinander, vorzugsweise bezüglich ihrer Halterung schalenförmig, angeordnet sind und sich ihre Lichtkegel tangieren oder überlappen.

7. Mikroskop mit mindestens einer Durchlicht-Beleuchtungseinrichtung nach einem der vorangehenden Ansprüche, **gekennzeichnet dadurch, dass** die Anordnung der LED's im Wesentlichen einer sphärischen Fläche entspricht

## Claims

1. Microscope having at least one transillumination device having at least one LED, wherein the microscope has illumination optics with an aperture stop plane, and has Köhler illumination optics and a microscope Base, **characterised in that** the transillumination device is formed in such a way that it can he disposed both in, or in the proximity of the plane of the aperture stop and also in the microscope base in front of the Köhler illumination optics.

2. Microscope having at least one transillumination device as claimed in claim 1, **characterised in that** the LED is disposed in the stand base in front of the illuminated field stop of the Köhler illumination optics.

3. Microscope having at least one transillumination device as claimed in any one of the preceding claims; **characterised in that** an optical element for light scattering is disposed downstream of the LED in the direction of the passage of light.

4. Microscope having at least one transillumination device as claimed in any one of the preceding claims, **characterised in that** the LED is disposed with a scattering disc and/or illumination optics in an insertion part.

5. Microscope having at least one transillumination devicc as claimed in any one of the preceding claims, **characterised in that** the light sources are white light LEDs.

6. Microscope having at least one transillumination device as claimed in any one of the preceding claims, **characterised in that** a plurality of LEDs are disposed next to each other, preferably in a dish-shaped manner with respect to the manner in which they are held, and their light cones are tangential to, of overlap each other.

7. Microscope having al least one transillumination device as claimed in any one of the preceding claims, **characterised in that** the arrangement of the LEDs corresponds substantially to a spherical surface.

## Revendications

1. Microscope avec au moins une installation d'éclairage par transmission avec au moins une diode luminescente où le microscope présente une optique d'éclairage avec un plan du diaphragme d'ouverture et une optique d'éclairage de Kôhler ainsi qu'un pied de microscope, **caractérisé en ce que** l'installation d'éclairage par transmission est réalisée de façon qu'elle puisse être disposée à la fois dans ou au voisinage du plan du diaphragme d'ouverture et aussi dans le pied de microscope en amont de l'optique d'éclairage de Kôhler.

2. Microscope avec au moins une installation d'éclairage par transmission selon la revendication 1, **caractérisé en ce que** la diode luminescente est disposée dans le pied de support en amont du diaphragme limitant de champ lumineux de l'optique d'éclairage de Kôhler.

3. Microscope avec au moins une installation d'éclairage par transmission selon l'une des revendications précédentes, **caractérisé en ce qu'**il est disposé en aval de la diode luminescente dans la direction de la lumière un élément optique pour la dispersion de la lumière.

4. Microscope avec au moins une installation d'éclairage par transmission selon l'une des revendications précédentes, **caractérisé en ce que** la diode luminescente avec le disque de dispersion et/ou l'optique d'éclairage est disposée dans une pièce insérable par poussée.

5. Microscope avec au moins une installation d'éclairage par transmission selon l'une des revendications précédentes, **caractérisé en ce que** les sources de lumière sont des diodes luminescentes de lumière blanche.

6. Microscope avec au moins une installation d'éclairage par transmission selon l'une des revendications précédentes, **caractérisé en ce que** plusieurs diodes luminescentes sont disposées les unes à côté des autres, de préférence en ce qui concerne leur retenue en forme de coque et que leurs cônes de lumière sont tangents ou se chevauchent.

7. Microscope avec au moins une installation d'éclairage par transmission selon l'une des revendications précédentes, **caractérisé en ce que** l'agencement des diodes luminescentes correspond sensiblement à une face sphérique.
